# EUROPEAN PATENT APPLICATION

(11) **EP 2 793 107 A2**
(43) Date of publication of application: **22.10.2014**
(21) Application number: 13190349.4
(22) Date of filing: 25.10.2013
(51) Int. Cl.: G06F 3/041, G06K 9/22, G06F 3/0354

(54) **Information input device**

(30) Priority: 18.04.2013 JP 2013087893
(71) Applicant: Brother Kogyo Kabushiki Kaisha, Nagoya, Aichi 467-8561 (JP)
(72) Inventor: Kasugai, Atsushi, Nagoya, Aichi 467-8562 (JP); Sago, Akira, Nagoya, Aichi 467-8562 (JP); Shibata, Yasuhiro, Nagoya, Aichi 467-8562 (JP); Inaba, Takehiko, Nagoya, Aichi 467-8562 (JP)
(74) Representative: Smith, Samuel Leonard

(57) **Abstract**

A detection device 2L can approach or separate from another detection device. The positional relationship between the detection device 2L and the other detection device can be changed according to opening and closing of a mounted notebook. The detection device 2L is connected by a harness 50 to the other detection device. The harness 50 includes an intermediate portion 52 extending between the detection devices and a folded portion 53 connected to the intermediate portion 52 and folded in two layers overlapping each other in a front-rear direction. When the detection device 2L approaches or separates from the other detection device, a displacement in a left-right direction occurs between a portion positioned on a front side and a portion positioned on a rear side of the folded portion 53 in two layers. The harness 50 rotates according to the displacement while maintaining a circular-arc shape of a bent portion 53A.

## Description

### BACKGROUND

The present invention relates to an information input device that is capable of acquiring information inputted on a recording medium that is in a booklet form in which a plurality of sheets are bound together.

A technique is known by which information written on a paper medium that is in a booklet form in which a plurality of sheets are bound together is converted into electronic form for storage and management. For example, in the information management system disclosed in Japanese Patent Application Publication No. 2002-132943, a user places a pocketbook on a pad of a digitizer and writes content by hand with a special pen on the pocketbook. The handwritten content is read as image data by the digitizer and stored in the memory of a personal computer.

The digitizer described in the abovementioned patent document is used in a state in which the digitizer is disposed on a table and the pocketbook is spread and placed on the pad of the digitizer. The resultant inconvenience is that the user should carry the digitizer and the pocketbook.

### SUMMARY

In a case where the user carries the pocketbook in a state in which the pocketbook is mounted on the digitizer, it may be possible that a pair of cover sheets of the pocketbook are attached to a pair of digitizers foldable in the middle, and that the pocket book is opened and closed together with the digitizers. However, the positional relationship between the pair of cover sheets positioned on the inner circumferential side of rotation when the pocketbook is opened and closed and the positional relationship between the pair of digitizers positioned on the outer circumferential side differ from each other when the pocketbook is opened and when it is closed. Therefore, if the user opens and closes the pocketbook in a state in which the cover sheets of the pocketbook are fixed to the digitizers, the cover sheets may be bent or curved.

It is an object of the present invention to provide an information input device in which the positional relationship between a pair of detection devices can be changed according to opening and closing of a recording medium in a booklet form.

According to the present invention, an information input device is provided that is configured to acquire information inputted on a recording medium by a writing tool. The recording medium is in a booklet form in which a pair of cover sheets and a plurality of sheets stacked and disposed between the pair of cover sheets are bound at a part of an edge thereof. The information input device includes a first detection device, a second detection device and a linking member. The first detection device is configured to detect a position of the writing tool in close proximity to the first detection device. The first detection device is a plate-shaped body configured to face a substantially entire surface of a first cover sheet of the pair of cover sheets. The first detection device has a first detection surface. The second detection device is configured to detect a position of the writing tool in close proximity to the second detection device. The second detection device is a plate-shaped body configured to face a substantially entire surface of a second cover sheet of the pair of cover sheets. The second detection device has a second detection surface. The linking member includes a fixing portion, a holding portion, and a bending portion. The fixing portion fixes the first detection device in a state in which the first detection device and the second detection device are disposed such that a first side and a second side are parallel to each other and positioned closer to each other than to other sides. The first side is one of sides surrounding an outer edge of the first detection surface. The second side is one of sides surrounding an outer edge of the second detection surface. The holding portion holds the second detection device such that the second detection device is movable in a direction in which the second side approaches the first side and in a direction in which the second side separates from the first side. The bending portion connects the fixing portion and the holding portion. The bending portion is configured to bend to a position in which the first detection device and the second detection device face each other.

In the information input device, the second detection device can approach and separate with respect to the first detection device. When the first detection device is disposed to face the first cover sheet of the recording medium and the second detection device is disposed to face the second cover sheet, the positional relationship between the first detection device and the second detection device can be changed according to the opening and closing of the recording medium. Therefore, it is possible to prevent a load from being applied to the first cover sheet and the second cover sheet of the recording medium. For that reason, it is possible to prevent the first cover sheet and the second cover sheet from being bent or curved.

The information input device may further include a first circuit portion, a second circuit portion, and a connection wire. The first circuit portion may be provided in the first detection device. The second circuit portion may be provided in the second detection device. The connection wire may include a plurality of conductive paths formed on a flexible insulating film and may electrically connect the first circuit portion and the second circuit portion. The connection wire may include a first connection portion, an intermediate portion, a folded portion, and a second connection portion. The first connection portion may be disposed between a first rear surface of the first detection device and the fixing portion. The first connection portion may include a terminal portion electrically connected to the first circuit portion. The first rear surface is a surface on a side opposite to the first detection surface. The intermediate portion may be connected to the first connection portion and may extend between the first detection device and the second detection device. The folded portion may be connected to the intermediate portion and disposed between a second rear surface of the second detection device and the holding portion. The folded portion may be folded back about an axis extending in a first direction to form two overlapping layers between the second detection device and the holding portion. The second rear surface is a surface on a side opposite to the second detection surface. The first direction is orthogonal to a direction in which the intermediate portion extends and orthogonal to a direction in which the second detection device and the holding portion face each other. The second connection portion may be connected to the folded portion. The second connection portion may include a terminal portion electrically connected to the second circuit portion. Since the connection wire includes the folded portion, the state is maintained in which the connection wire is folded while the second detection device approaches or separates with respect to the first detection device. Therefore, it is possible to prevent the connection wire from being stretched or contracted. Thus, it is possible to reduce a load to be applied to the connection wire.

The information input device may further include a first cover member and a support portion. The first cover member may be fixed to the holding portion of the linking member and may cover the folded portion. The folded portion may be disposed between the second rear surface and the first cover member. The support portion may be provided to the second detection device and may support the first cover member such that the first cover member is movable in a second direction along the second rear surface. The second direction is orthogonal to a direction in which the second side extends. By covering the folded portion of the connection wire with the first cover member, it is possible to restrict a displacement of the connection wire that may occur due to a pushing or pulling force that is applied to the folded portion when the second detection device approaches or separates with respect to the second detection device. The first cover member can reliably maintain a state in which the connection wire is folded back in the folded portion. Further, since the first cover member is supported by the support portion such that the first cover member is movable in the second direction, the first cover member can move according to pushing or pulling acting upon the folded portion. Therefore, it is possible to prevent the folded portion from being contracted in the first cover member or being pulled out of the first cover member.

In the information input device, the first cover member may include two first engagement portions disposed side by side in the second direction and fixing the first cover member to the holding portion, and the holding portion may include two second engagement portions respectively engaging with the two first engagement portions. One of the two first engagement portions and one of the two second engagement portions may be a protrusion and a hole, or a hole and a protrusion, respectively, and may be configured to fix the linking member to the first cover member by engaging with each other. The other of the two first engagement portions and the other of the two second engagement portions may be a protrusion and a hole, or a hole and a protrusion, respectively. A gap between the other of the two first engagement portions and the other of the two second engagement portions may be larger than a gap between the one of the two first engagement portions and the one of the two second engagement portions. In such a case, the first cover member can rotate about the one of the first engagement portions or the one of the second engagement portions as an axis, within a range of the gap between the other of the two first engagement portions and the other of the two second engagement portions. Thus, the second detection device can rotate relative to the first detection device about the one of the first engagement portions or the one of the second engagement portions as the axis. Therefore, even if torsion occurs in a direction that is different from the second direction in the positional relationship between the first cover sheet and the second cover sheet when the recording medium is opened or closed, the orientation of the second detection device relative to the first detection device can be adjusted by the rotation. Therefore, a load is less likely to be applied to the first cover sheet and the second cover sheet of the recording medium. As a result, the information input device can prevent the recording medium from being bent or curved.

In the information input device, the first cover member may include a wall portion, three side walls, and a third engagement portion. The two first engagement portions may be provided to the wall portion. The three side walls may protrude from edges of the wall portion towards the second rear surface. The three side walls may be disposed to open one of the edges of the wall portion and close three of the edges of the wall portion. The one of the edges is positioned on a side of the second side. The third engagement portion may be connected to two opposing side walls, among the three side walls, and may engage with the support portion. The folded portion may be disposed between the second rear surface and the wall portion. The support portion may support the first cover member via the third engagement portion such that the first cover member is movable in the second direction. In such a case, the first cover member includes the other side wall that is orthogonal to the two opposing side walls and that functions as a rib that supports the two side walls. Therefore, it is possible to ensure the strength of the first cover member.

The information input device may further include a first fixing member and a second fixing member, and the folded portion may include a first layer portion, a second layer portion, and a bent portion. The first layer portion may be a portion disposed on a side of the wall portion, of the two overlapping layers. The second layer portion may be a portion disposed on a side of the second rear surface, of the two overlapping layers. The bent portion may connect the first layer portion and the second layer portion. The bent portion may be a portion where a direction in which the connection wire extends changes and where a deformation occurs according to a movement of the first cover member in the second direction. The first fixing member may fix the first layer portion to a wall surface of the wall portion on a side of the second rear surface. The first fixing member may be provided at one end of the bent portion. The second fixing member may fix the second layer portion to the second rear surface. The second fixing member may be provided at the other end of the bent portion. In this case, since the first fixing member and the second fixing member fix the both ends of the bent portion, the deformation of the connection wire in the bent portion is less likely to fluctuate, even if the a pushing or pulling external force is applied to the connection wire when the second detection device approaches or separates with respect to the first detection device. Therefore, the deformation of the connection wire according to the movement of the first cover member in the second direction can be performed stably and smoothly.

In the information input device, a first distance may be less than a second distance. The first distance is a distance in a third direction between the second rear surface and the wall portion on a side of the one edge that is open. The second distance is a distance in the third direction between the second rear surface and the wall portion on a side opposite to the one edge that is open. The third direction is a direction in which the wall portion and the second rear wall face each other. In this case, the size of an inner space of the first cover member is greater on the side that is opposite to the side where the side wall is not formed. By disposing the bent portion of the connection wire on this side, it is possible to increase the radius of the inscribed circle of the circular arc formed by the bent portion. Therefore, a load such as bending load applied to the connection wire can be reduced.

In the information input device, the intermediate portion may be disposed at a position closer to a center than ends of the first side and the second side in a direction in which the first side and the second side extend. Torsion may be applied to the fixing portion and the holding portion when the bending portion is bent to a position in which the first detection device and the second detection device face each other, such as when the linking member is opened or closed. By disposing the intermediate portion at the position closer to the center than to the end portions that are more likely to be affected by tension resulting from the torsion, it is possible to reduce a load applied to the connection wire.

In the information input device, the linking member may further include a second cover member that sandwiches the intermediate portion between the second cover member and the bending portion so as to cover the intermediate portion. The second cover member can cover and hide the connection wire when the linking member is opened. The second member can press the connection wire so that the connection wire is bent along the inner surface of the bending portion, thereby guiding the connection wire in the bending direction.

In the information input device, the second cover member may be disposed at a position in which an end portion of the second cover member on a side of the holding portion overlaps an end portion of the second detection device on a side of the second side. If the end portion of the second detection device on the side of the second side is at the position in which the end portion overlaps the first detection device at all times, both in the separated state and in the proximate state, the information input device can be prevented from being caught on the edge of the second cover member and generating resistance when moving.

### BRIEF DESCRIPTION OF THE DRAWINGS

FIG. 1 is a configuration diagram of an information input device 1 as a whole;

FIG. 2 is a perspective view of the information input device 1 in an opened state in which notebook 5 is mounted on the information input device 1;

FIG. 3 is a front view of an outer cover 4 in the opened state;

FIG. 4 is an exploded perspective view of detection devices 2L and 2R;

FIG. 5 is a perspective view of a holder 60 and a harness 50 in a state in which the holder 60 and the harness 50 are attached to a rear cover 9L;

FIG. 6 is another perspective view of the holder 60 and the harness 50 in the state in which the holder 60 and the harness 50 are attached to the rear cover 9L;

FIG. 7 is a sectional view taken along the dashed dotted line I-I in FIG. 6, illustrating the state of the holder 60 and the harness 50 when the detection devices 2L and 2R are in a proximate state; and

FIG. 8 is a sectional view taken along the dashed dotted line I-I in FIG. 6, illustrating the state of the holder 60 and the harness 50 when the detection devices 2L and 2R are in a separated state.

### DETAILED DESCRIPTION

An embodiment of the present invention will be described below with reference to the drawings. The drawings serve to illustrate technical features that can be employed in the present invention. The configurations of the device illustrated by the drawings merely represent examples and thus are not intended to be limiting.

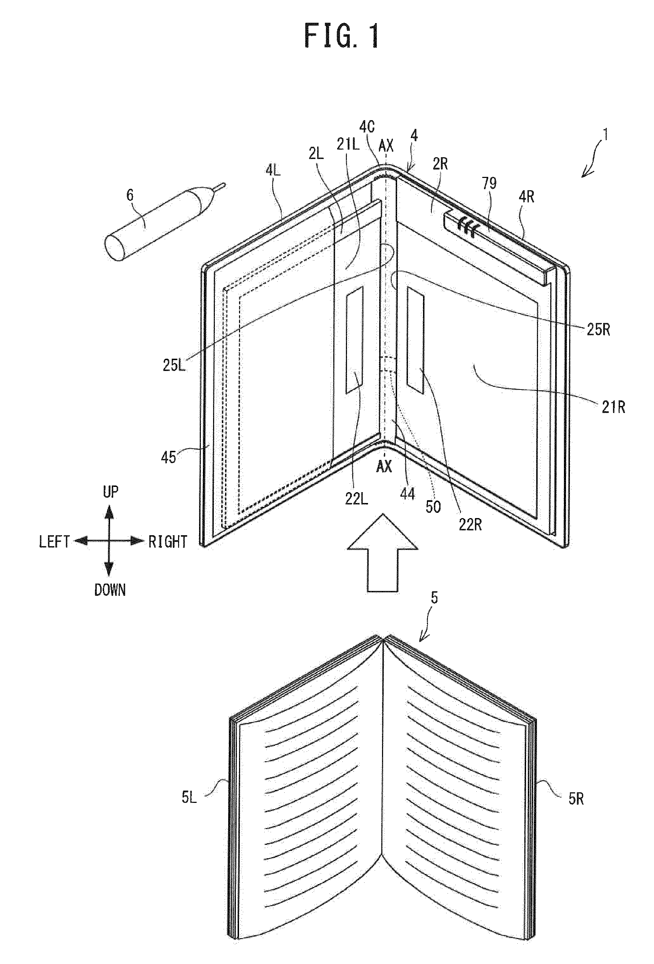

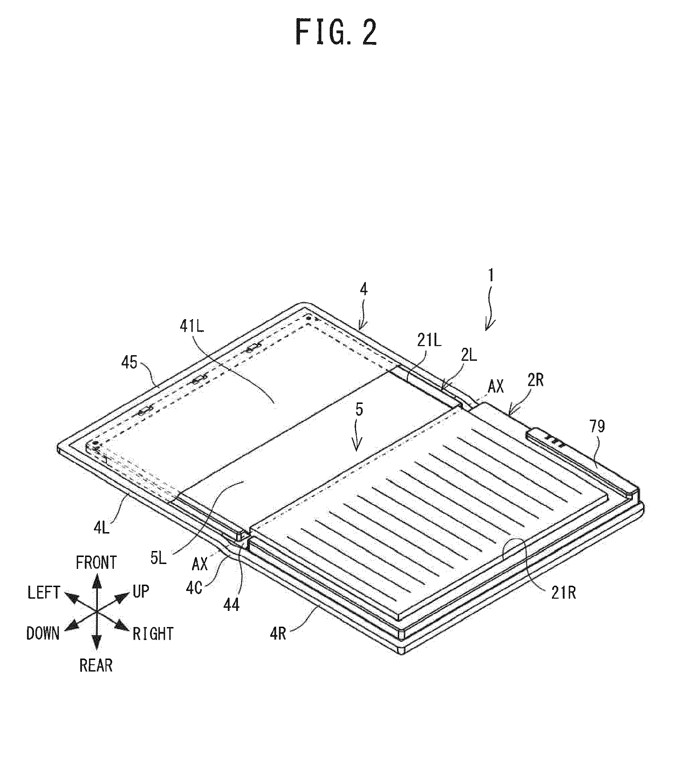

An information input device 1 according to the present embodiment is explained with reference to FIGS. 1 to 3. In the explanation below, the upper side, lower side, upper left side, lower right side, upper right side, and lower left side in FIG. 2 respectively define the front side, rear side, left side, right side, upper side, and lower side of the information input device 1. The directions of an outer cover 4 and detection devices 2L and 2R, which are elements of the information input device 1, are defined, for the sake of convenience, according to the directions of the information input device 1 in relation to the assembled state of the information input device 1. Likewise, the directions of a notebook 5 mounted on the information input device 1 are defined, for the sake of convenience, according to the directions of the information input device 1 in relation to a state in which the notebook 5 is mounted on the information input device 1. FIG. 1 illustrates a state in which the information input device 1 is half-opened or half-closed. FIG. 2 illustrates a state in which the information input device 1 is fully opened.

The information input device 1 shown in FIG. 1 is a tablet-type handwriting input device that can be carried by a user. The information input device 1 may be provided in an assembled state in which two plate-shaped detection devices 2L and 2R are mounted to the outer cover 4. The outer cover 4 is configured to be foldable in the left-right direction (that is, foldable in the middle), with the front side being the spread front side, and includes a left cover portion 4L and a right cover portion 4R. The detection device 2L is disposed on the left cover portion 4L, and the detection device 2R is disposed on the right cover portion 4R. The user may mount a recording medium in a booklet form, for example the notebook 5, on the detection devices 2L and 2R and write information on the notebook 5 with an electronic pen 6. The information input device 1 can read the information written on the notebook 5 by using the detection devices 2L and 2R. The electronic pen 6 is a writing tool that is capable of recording information (text, symbols, graphics, and digits) on the notebook 5 with ink and is also capable of inputting the recorded information to the detection devices 2L and 2R. The electronic pen 6 of the present embodiment includes a variable-capacity capacitor and a coil (not shown in the figure) constituting a well-known resonance (tuning) circuit. The detection devices 2L and 2R are of a well-known electromagnetic induction type that are capable of detecting the position of the electronic pen 6 when the electronic pen 6 is in close proximity to the detection devices 2L and 2R.

As shown in FIGS. 1 and 2, the detection devices 2L and 2R are each configured such that the notebook 5 can be fixed to the front surface thereof. More specifically, the detection devices 2L and 2R have recessed positioning portions 21L and 21R, respectively, which perform positioning when left and right cover sheets 5L and 5R of the notebook 5 are fixed to the front surfaces of the detectors. The positioning portion 21L has steps on the upper, left, and lower sides, and does not have a step on the right side. The upper, left and lower steps of the positioning portion 21L are configured to position the notebook 5 with respect to the detection device 2L by contacting with the upper, left, and lower edges of the left cover sheet 5L of the notebook 5. The positioning portion 21L includes an adhesive portion 22L (see FIG. 1) that has light adhesivity at a position close to the right side inside the recess. The adhesive portion 22L is configured to bond and fix the left cover sheet 5L of the notebook 5 to the positioning portion 21L in a state such that the left cover sheet 5L can be easily peeled off. The positioning portion 21R has steps on the upper, right, and lower sides, and does not have a step on the left side. The upper, right and lower steps of the positioning portion 21R are configured to position the notebook 5 with respect to the detection device 2R by contacting with the upper, right, and lower edges of the right cover sheet 5R of the notebook 5. The positioning portion 21R includes an adhesive portion 22R (see FIG. 1) which has light adhesivity at a position close to the left side inside the recess. The adhesive portion 22R is configured to bond and fix the right cover sheet 5R of the notebook 5 to the positioning portion 21R in a state such that the right cover sheet 5R can be easily peeled off.

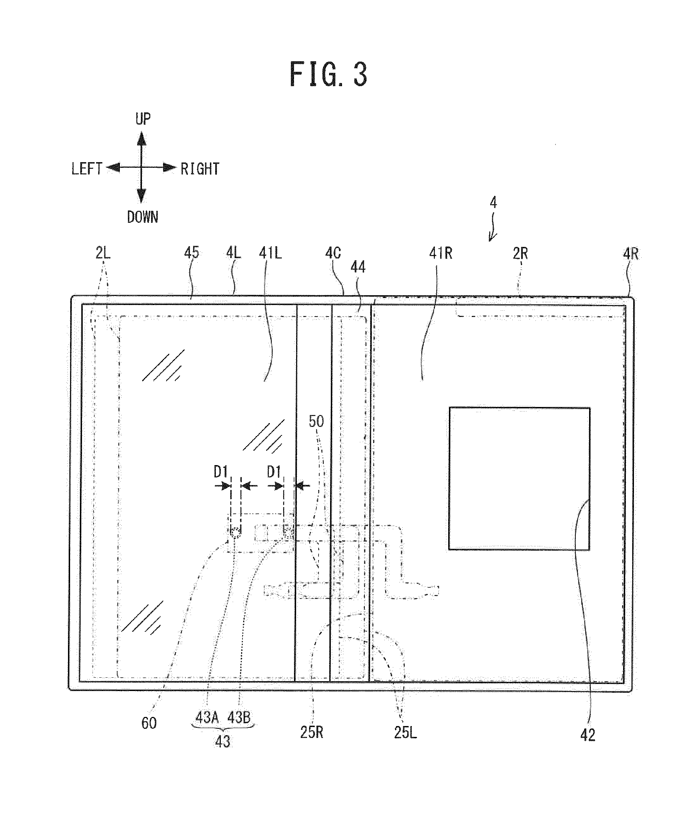

As shown in FIG. 3, the outer cover 4 is a rectangular plate-shaped body that is longer in the left-right direction when unfolded. The outer cover 4 includes a left cover portion 4L that holds the detection device 2L, a right cover portion 4R that fixes the detection device 2R, and a bending portion 4C that connects the left cover portion 4L and the right cover portion 4R in the center in the left-right direction. The outer cover 4 is fabricated from a flexible material (for example, synthetic leather or nylon) that is deformable in response to an outer force. The bending portion 4C may be bent, with the front surface on the inner side, along an axial line AX (see FIG. 1) extending in the up-down direction. Thus, by bending the bending portion 4C, it is possible to fold the outer cover 4 to a position in which the detection device 2L and the detection device 2R face each other.

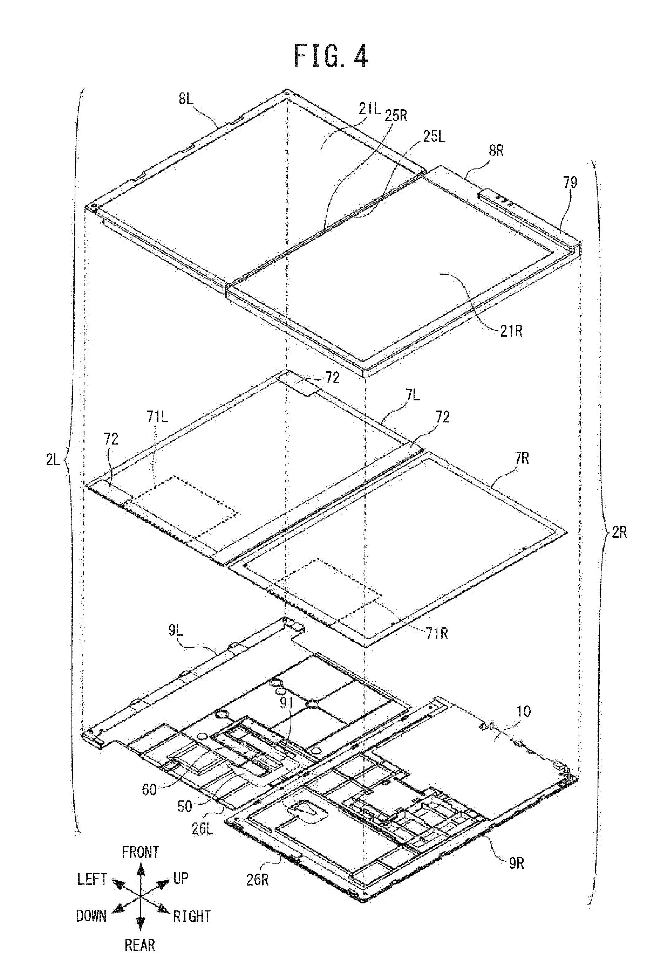

The outer cover 4 includes, on the right cover portion 4R, a fixing sheet 41R for fixing the detection device 2R. The fixing sheet 41R is fixed to the outer cover 4 by incorporating three sides, namely, the upper, right, and lower sides, into an edge 45 of the outer cover 4, and incorporating the left side in the bending portion 4C. The detection device 2R is fixed to the outer cover 4 by bonding the rear surface 26R (see FIG. 4), for example, with a two-sided adhesive tape, to the fixing sheet 41R. The fixing sheet 41R has an opening 42 in the center. The rear surface 26R of the detection device 2R has a mounting portion (not shown in the figure) for a battery. The mounting portion for a battery is disposed inside the opening 42. A cover body (not shown in the figure), which can be opened and closed using a surface fastener, is provided on the rear surface of the outer cover 4 (this configuration is not shown in the figure). The user can replace a battery (not shown in the figure) by opening the cover body, without detaching the detection device 2R from the outer cover 4.

The outer cover 4 includes, on the left cover portion 4L, a holding sheet 41L that holds the detection device 2L. The holding sheet 41L is, for example, a transparent flexible vinyl chloride sheet. Three sides, namely, the upper, left, and lower sides, of the holding sheet 41L are incorporated into the edge 45 of the outer cover 4, and the right side of the holding sheet is open. The detection device 2L is inserted from the right side of the holding sheet 41L between the holding sheet 41L and the main body of the outer cover 4. The detection device 2L is held by the holding sheet 41L in a state in which the right end portion of the detection device projects to the right from the right side of the holding sheet 41L. The detection device 2L is provided with a holder 60 on a rear surface 26L (see FIG. 4) side (this configuration will be described later in detail). The holder 60 is configured to be slidable in the left-right direction relative to the main body of the detection device 2L. The left cover portion 4L of the outer cover 4 is provided with a fixing portion 43 that is configured to fix the holder 60. In the present embodiment, the fixing portion 43 includes two eyelets 43A and 43B disposed side by side in the left-right direction. The eyelets 43A and 43B have the same opening diameter D1. When the holder 60 is fixed to the fixing portion 43, the detection device 2L is held by the holding sheet 41L in a state in which the detection device 2L is slidable in the left-right direction relative to the left cover portion 4L of the outer cover 4.

The outer cover 4 includes a wide band-shaped body 44 that extends in the up-down direction and that covers the bending portion 4C at the front surface side of the bending portion 4C. The upper and lower ends of the band-shaped body 44 are respectively incorporated into the upper and lower edges 45 of the outer cover 4, in a state in which the band-shaped body 44 is stretched in the up-down direction. There is a gap between the band-shaped body 44 and the front surface of the bending portion 4C. A harness 50 that connects the detection devices 2L and 2R passes through between the band-shaped body 44 and the front surface of the bending portion 4C (this configuration will be described later). When the outer cover 4 is in an opened state, the band-shaped body 44 covers and hides the harness 50. When the outer cover 4 is folded, the band-shaped body 44 presses the harness 50 from the front side so that the harness 50 is bent about the axial line AX (see FIG. 1) along the front surface of the bending portion 4C, thereby guiding the harness 50 in the bending direction. The outer cover 4 may also be provided with a band that is configured to support the cover body of the battery in a closed state and that can be used for bookmarking or the like, a holder for the electronic pen 6, and a pocket in which materials can be stored (not shown in the figure).

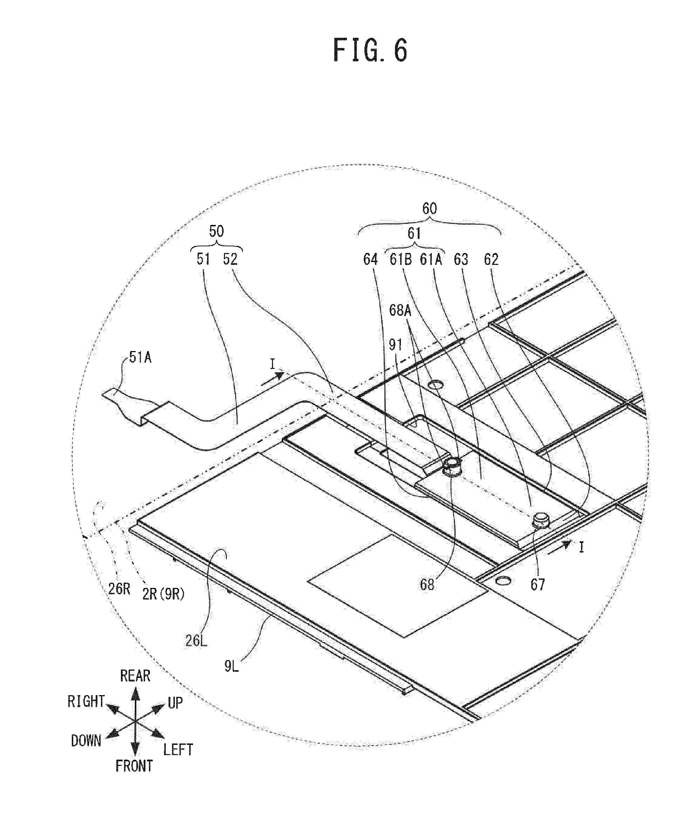

The structure of the detection devices 2L and 2R is explained below with reference to FIGS. 4 to 8. As mentioned above, each of the detection devices 2L and 2R is of the known electromagnetic induction type that is configured to detect the position of the electronic pen 6 when the pen is in close proximity. Each of the detection devices 2L and 2R is a box-shaped body of a rectangular shape with a longer side extending along the up-down direction (in the front view) and a small thickness in the front-rear direction.

As shown in FIG. 4, the detection device 2R includes a front cover 8R and a rear cover 9R. Each of the front cover 8R and the rear cover 9R is a substantially rectangular resin sheet with long sides extending along the up-down direction. The aforementioned positioning portion 21R is provided on the front surface of the front cover 8R. The detection of the position of the electronic pen 6 in close proximity by a digitizer substrate 7R, which will be described later, is performed at the front surface side of the front cover 8R. For the sake of convenience, the front surface of the front cover 8R is referred to as a detection surface of the detection device 2R. When the front cover 8R and the rear cover 9R are combined together, a box-shaped body is formed that has an accommodation space inside.

In the detection device 2R, the digitizer substrate 7R, a control substrate 71R, and a main substrate 10 are accommodated between the front cover 8R and the rear cover 9R. The digitizer substrate 7R is configured to detect the position of the electronic pen 6 in close proximity. The control substrate 71 R is configured to control the electric current flowing to the digitizer substrate 7R. A CPU (not shown in the figure) that is configured to control the information input device 1 is installed on the main substrate 10. The main substrate 10 is provided with components such as a power supply switch, a light-emitting element, a communication unit, various switches, and a connector (not shown in the figure). Those components are accommodated in an accommodation portion 79 provided in the upper right end portion of the front cover 8R. The CPU of the main substrate 10 is capable of communicating in a wireless manner or via a wire with an external device (not shown in the figure), such as a personal computer, positioned in the vicinity thereof. The main substrate 10 is electrically connected to the control substrate 71R. The control substrate 71R is provided integrally with the digitizer substrate 7R at the lower end portion of the rear surface of the digitizer substrate 7R.

In the digitizer substrate 7R, a large number of thin and long loop coils are arranged in the X-axis direction (more specifically, the left-right direction) and Y-axis direction (more specifically, up-down direction). The control substrate 71R causes an electric current of a specific frequency (transmission current for excitation) to flow in the loop coils on a one-by-one basis to generate a magnetic field. As a result, the resonant circuit of the electronic pen 6 in the proximity of the digitizer substrate 7R generates an inductive magnetic field. An electric current (signal current) is generated by the inductive magnetic field and flows in the loop coils. The control substrate 71R detects the signal current flowing in the loop coils. The CPU of the main substrate 10 determines the positional coordinates of the electronic pen 6 over time on the basis of the signal current detected by the control substrate 71R. The CPU generates stroke data that indicates the trajectory of the electronic pen 6 on the basis of the positional coordinates. The CPU outputs the stroke data to the external device (personal computer or the like) connected to the information input device 1.

Similarly to the detection device 2R, the detection device 2L includes a front cover 8L and a rear cover 9L. Each of the front cover 8L and the rear cover 9L is a substantially rectangular resin sheet with long sides extending along the up-down direction. The aforementioned positioning portion 21L is provided on the front surface of the front cover 8L. The detection of the position of the electronic pen 6 in close proximity by a digitizer substrate 7L, which will be described later, is performed at the front surface side of the front cover 8L. For the sake of convenience, the front surface of the front cover 8L is referred to as a detection surface of the detection device 2L. The upper and lower end portions, except for the left end portion, of the front cover 8L are each folded back to the rear surface side (the details of this configuration are not shown in the figure). The rear cover 9L has notches that are respectively formed along the upper and lower end portions, except for the left end portion. The notches engage with the portions of the front cover 8L that are folded back to the rear surface side when the detection device 2L is assembled. When the front cover 8L and the rear cover 9L are combined together, a box-shaped body is formed that has an accommodation space inside.

In the detection device 2L, the digitizer substrate 7L and a control substrate 71L are accommodated between the front cover 8L and the rear cover 9L. The digitizer substrate 7L is configured to detect the position of the electronic pen 6 in close proximity. The control substrate 71L is configured to control the electric current flowing to the digitizer substrate 7L. The control substrate 71L is provided integrally with the digitizer substrate 7L at the lower end portion of the rear surface of the digitizer substrate 7L. The digitizer substrate 7L and the control substrate 71L are configured similarly to the digitizer substrate 7R and the control substrate 71R of the detection device 2R, respectively. The digitizer substrate 7L and the control substrate 71L can detect the position of the electronic pen 6 in close proximity by the know electromagnetic induction method. Insulating members 72 for protecting the digitizer substrate 7L from electrostatic charges or the like are provided at the right edge, upper left corner, and lower left corner of the digitizer substrate 7L.

The control substrate 71R and the control substrate 71L are connected by the harness 50. The harness 50 is a flexible substrate on which a pattern is formed that electrically connects the control substrate 71R and the control substrate 71L. In other words, the harness 50 is a flexible insulating film on which a plurality of conductive paths are formed. A terminal portion 51A provided at one end of the harness 50 is connected to the control substrate 71R, and a terminal portion 54A provided at the other end of the harness 50 is connected to the control substrate 71L. A portion between the terminal portion 51A and the terminal portion 54A is wired in a state of in which the portion is folded in two layers that are overlapped each other in the front-rear direction. The holder 60 that is configured to protect the harness 50 is provided on the folded portion of harness 50. The harness 50 and the holder 60 will be described in detail later.

As mentioned above, the left cover portion 4L (see FIG. 1) holds the detection device 2L such that the detection device 2L is slidable in the left-right direction. The right cover portion 4R (see FIG. 1) fixes the detection device 2R. Thus, the outer cover 4 in the opened state holds the detection device 2L such that the detection device 2L is movable in a direction in which the detection device 2L approaches the detection device 2R and in a direction in which the detection device 2L separates from the detection device 2R. In other words, the detection device 2L and the detection device 2R are respectively held and fixed to the outer cover 4 in a state in which an opposing side 25L and an opposing side 25R are parallel to each other and the opposing side 25L can move in a direction in which the opposing side 25L approaches the opposing side 25R and in a direction in which the opposing side 25L separates from the opposing side 25R. The opposing side 25L is a side positioned on the detection device 2R side, among the sides surrounding the outer edge of the detection surface (front surface) of the detection device 2L. The opposing side 25R is a side positioned on the detection device 2L side, among the sides surrounding the detection surface (front surface) of the detection device 2R. The state in which the opposing side 25L has approached the opposing side 25R, and the detection device 2L is at a position (shown by dashed tow-dotted line in the figure) in close proximity to the detection device 2R, as shown in FIG. 3, is called a "proximate state". The state in which the opposing side 25L has separated from the opposing side 25R, and the detection device 2L is separated from the detection device 2R (dashed dotted line in the figure) is called a "separated state".

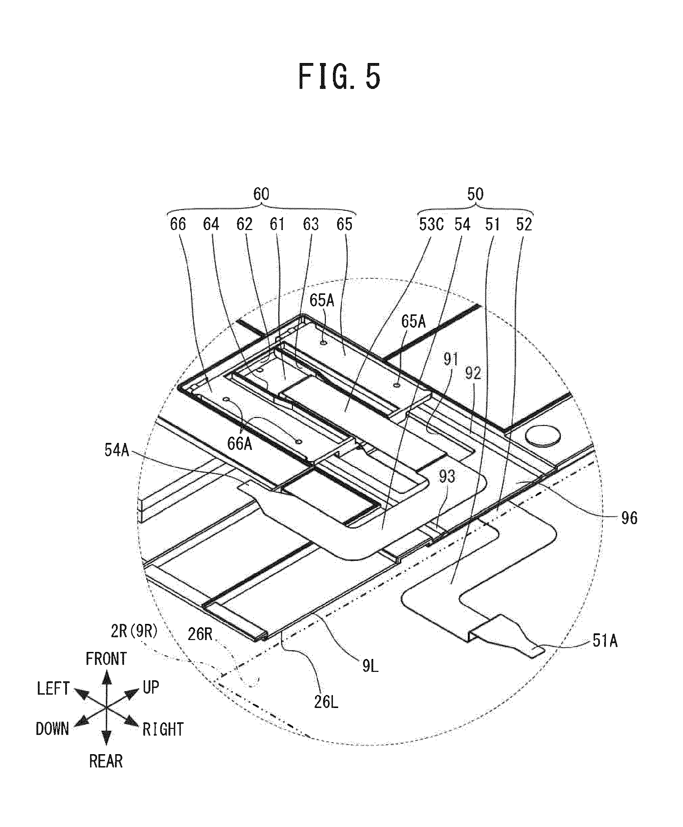

The holder 60 and the harness 50 that connects the control substrate 71R and the control substrate 71L are configured in the following manner in order to obtain the configuration in which the detection device 2L can be moved relative to the detection device 2R between the proximate state and the separated state. As shown in FIG. 4, the rear cover 9L has an opening 91 that penetrates the rear cover 9L in the front-rear direction below the center in the up-down direction and on the right side from the center in the left-right direction. As shown in FIGS. 5 to 7, the opening 91 has a substantially rectangular shape with long sides extending along the left-right direction. The rear cover 9L has a recessed portion 96 (see FIG. 5) formed on the front surface around the opening 91. A pair of protruding portions 92 and 93 that extend in the left-right direction are formed in the vicinity of the upper and lower ends, respectively, in the recessed portion 96. The protruding portions 92 and 93 respectively engage with flanges 65 and 66 of the holder 60 that will be described later. The protruding portions 92 and 93 are configured to support the holder 60 such that the holder 60 is slidable in the left-right direction (direction orthogonal to the opposing side 25L of the detection device 2L).

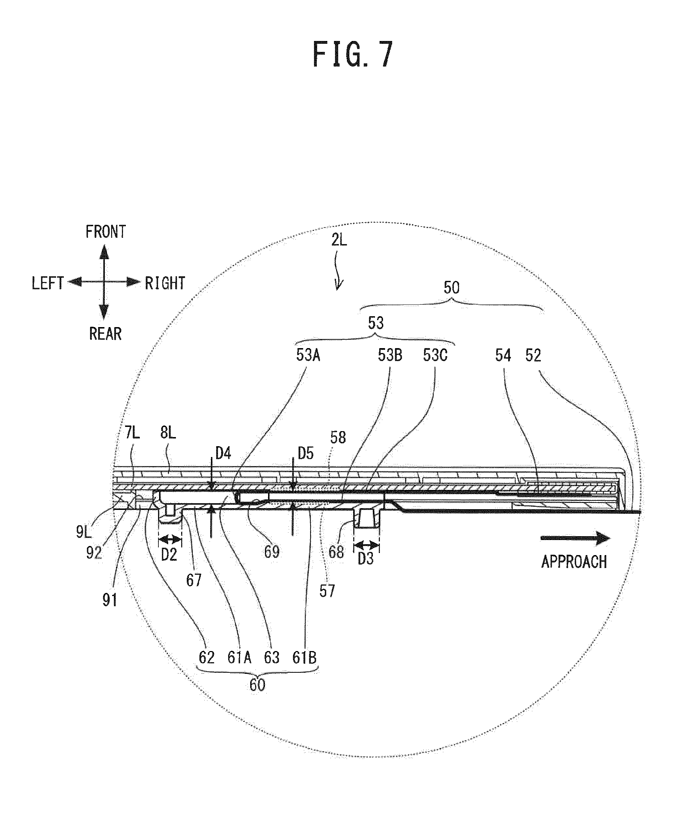

The holder 60 includes a wall portion 61, three side walls 62, 63, and 64, and flanges 65 and 66. The wall portion 61 includes a first wall portion 61A and a second wall portion 61B, each being of a rectangular shape with longer sides extending along the left-right direction. The first wall portion 61A and the second wall portion 61B are connected with each other in the left-right direction. The side walls 62, 63, and 64 project forward from the left edge, upper edge, and lower edge, respectively, of the wall portion 61. No side wall is formed at the right side of the wall portion 61. The thickness of the first wall portion 61A is different from the thickness of the second wall portion 61B. The second wall portion 61B disposed on the right side is thicker than the first wall portion 61A disposed on the left side. The holder 60 is disposed such that the front surface of the holder 60 is opposed to the rear surface of the digitizer substrate 7L. As shown in FIG. 7, the distance D4 between the first wall portion 61A and the digitizer substrate 7L in the front-rear direction is greater than the distance D5 between the second wall portion 61B and the digitizer substrate 7L in the front-rear direction. Thus, the holder 60 is formed such that the size, in the front-rear direction, of an inner space formed between the wall portion 61 and the rear surface of the digitizer substrate 7L is greater on the side where the side wall 62 is formed (that is, the first wall portion 61A side) than on the side where the side wall is not formed (that is, the second wall portion 61B side) in the left-right direction.

As shown in FIG. 7, an inclined surface 69 is formed in a portion connecting the first wall portion 61A and the second wall portion 61B od the front surface side of the wall portion 61. The length of the wall portion 61 in the up-down direction is somewhat less than the length of the opening 91 in the up-down direction. The length of the wall portion 61 in the left-right direction is less than the length of the opening 91 in the left-right direction. The length of the side walls 62, 63, and 64 in the front-rear direction is substantially equal to the thickness of the rear cover 9L. When the holder 60 is disposed inside the opening 91, the rear surface of the wall portion 61 is arranged at substantially the same position as the rear surface of the rear cover 9L. The movement of the holder 60 in the up-down direction is restricted by the upper edge and lower edge of the opening 91. The holder 60 can move in the left-right direction over a distance that corresponds to the difference in length between the wall portion 61 and the opening 91.

As shown in FIG. 5, the flange 65 projects in a flange-like manner upward from the front end portion of the side wall 63. The flange 66 projects in a flange-like manner downward from the front end portion of the side wall 64. The length, in the up-down direction, from the projecting end (upper end) of the flange 65 to the projecting end (lower end) of the flange 66 is substantially equal to the length, in the up-down direction, of the recessed portion 96 formed around the opening 91. When the holder 60 is disposed in the opening 91, the rear surface of the flange 65 is in contact with the protruding portion 92 formed at the upper end portion of the recessed portion 96. The rear surface of the flange 66 is in contact with the protruding portion 93 provided at the lower end portion of the recessed portion 96. Two protruding portions 65A and two protruding portions 66A each protruding spherically forward are provided on the front surfaces of the flanges 65 and 66, respectively. The protruding portions 65A and 66A facilitate smooth sliding of the holder 60 along the rail-shaped protruding portions 92 and 93 by contacting with the lower surface of the digitizer substrate 7L and maintaining a gap between the rear surface of the digitizer substrate 7L and the front surfaces of the flanges 65 and 66. The holder 60 can slide in the left-right direction within a range from a position at which the left end of the first wall portion 61A contacts with the left edge of the opening 91 to a position at which the right end of the second wall portion 61B contacts with the right edge of the opening 91.

Two protrusions 67 and 68 each protruding cylindrically rearward are provided on the rear surface of the wall portion 61. The protrusion 67 is provided at the left end of the first wall portion 61A. The protrusion 68 is provided at the right end of the second wall portion 61B. The protrusion 68 has two protruding portions 68A each protruding radially outward from the protruding end of the protrusion 68. The protrusion 67 engages with the eyelet 43A (see FIG. 3) provided in the outer cover 4. The protrusion 68 engages with the eyelet 43B provided in the outer cover 4. The outer diameter D3 of the protrusion 68 is greater than the outer diameter D2 of the protrusion 67. The outer diameter D3 is substantially equal to the opening diameter D1 of the eyelet 43B. When the protrusion 68 engages with the eyelet 43B, the protruding portion 68A functions as a retainer. The outer diameter D2 of the protrusion 67 is less than the opening diameter D1 of the eyelet 43A. Therefore, the protrusion 67 can move inside the eyelet 43A in a state in which the protrusion 67 is engaged with the eyelet 43A. In a state in which the protrusion 68 is fixed to the eyelet 43B, the holder 60 can rotate within a range in which the protrusion 67 can move inside the eyelet 43A about the protrusion 68 as an axis. With such a configuration, the detection device 2L can rotate relative to the detection device 2R about the protrusion 68. For example, when the notebook 5 attached to the detection devices 2L and 2R is opened and closed, torsion may occur in the direction different from the left-right direction in the positional relationship of the left cover sheet 5L and the right cover sheet 5R. In such a case, the orientation of the detection device 2L relative to the detection device 2R can still be adjusted by the rotation. Therefore, a load is less likely to be applied to the left cover sheet 5L and the right cover sheet 5R of the notebook 5. As a result, the information input device 1 can prevent the notebook 5 from being bent or curved.

As shown in FIG. 3, the fixing portion 43 is formed at a position such that when the detection device 2L is in the separated state with respect to the detection device 2R (see the dashed dotted line in FIG. 3), the right end portion of the detection device 2L overlaps the left end portion of the band-shaped body 44 of the outer cover 4. As described above, the movement range of the holder 60 is restricted to a range in which the wall portion 61 contacts with the opening 91. Therefore, if the detection device 2L is at a position in which the right end portion overlaps the band-shaped body 44 in the separated state, the right end portion also overlaps the band-shaped body 44 in the proximate state. The harness 50 passes between the front surface of the bending portion 4C and the band-shaped body 44. There are gaps between the left and right edges of the band-shaped body 44 and the bending portion 4C. The detection device 2L is at a position in which the right end portion of the detection device 2L overlaps the band-shaped body 44 at all times, both in the separated state and in the proximate state. Therefore, the information input device 1 can be prevented from being caught on the edge of the band-shaped body 44 and generating resistance when moving between the separated state and the proximate state.

When the holder 60 is fixed to the fixing portion 43, the holder 60 supports the detection device 2L with the flanges 65 and 66 on the outer cover 4. The flanges 65 and 66 are supported at the side walls 63 and 64, respectively. The side walls 63 and 64 are supported at the wall portion 61. Therefore, when the weight of the detection device 2L is applied to the holder 60, the wall portion 61 receives, through the side walls 63 and 64, a force in a direction such that the force reduces the distance between the flanges 65 and 66. As mentioned above, the holder 60 has the side wall 62 that is perpendicular to the side walls 63 and 64. Since the side wall 62 functions as a rib supporting the side walls 63 and 64, the strength of the holder 60 can be ensured.

As shown in FIGS. 5 to 7, the harness 50 includes a right-side connection portion 51, a left-side connection portion 54, an intermediate portion 52, and a folded portion 53. The right-side connection portion 51 includes the terminal portion 51A provided at one end of the harness 50. The terminal portion 51A is inserted for connection from the left side into a connector portion (not shown in the figures) of the control substrate 71R. The right-side connection portion 51 extends to the left from the terminal portion 51A, bent upward and extends further upward, along the rear surface 26R of the detection device 2R, towards a position closer to the center than to the end portions of the detection device 2R in the up-down direction.

The intermediate portion 52 is a portion that extends to the left from the end of the right-side connection portion 51 on the side opposite to the terminal portion 51A. The intermediate portion 52 is a portion that extends in the left-right direction and links the detection device 2R and the detection device 2L. The intermediate portion 52 links the detection device 2R and the detection device 2L at a position closer to the center than to the ends of the opposing sides 25L, 25R in the up-down direction, and extends toward the holder 60. For example, when the outer cover 4 is opened or closed, torsion may be applied in the front-rear direction about an axis extending in the left-right direction to the left cover portion 4L and the right cover portion 4R. In this case, the upper end portion and lower end portion of the detection device 2R and the detection device 2L are likely to be affected by the tension resulting from the torsion. Accordingly, by disposing the intermediate portion 52 at the position closer to the center than to the ends in the up-down direction, rather than at the upper end portion or lower end portion, it is possible to reduce a possibility that a load is applied to the harness 50.

The folded portion 53 extends to the left from the end of the intermediate portion 52, bends stepwise forward, and enters a section of the holder 60 surrounded by the wall portion 61 and the three side walls 62, 63, and 64. The folded portion 53 is bent forward and back at 180 degrees about an axis extending in the up-down direction, inside the holder 60, and extends to the right. A portion of the folded portion 53 that is bent forward and back at 180 degrees about the axis extending in the up-down direction is called a bent portion 53A. A portion of the folded portion 53 that extends to the left from the end of the intermediate portion 52 as far as to the bent portion 53A and that is disposed on a side of the wall portion 61 is called a first layer portion 53B. A portion of the folded portion 53 that extends to the right from the bent portion 53A as far as to the left-side connection portion 54 and that is disposed on a side of the rear surface of the digitizer substrate 7L is called a second layer portion 53C. In a state in which the bent portion 53A is maintained in a circular arc shape, the folded portion 53 is disposed inside the holder 60 in the form of two layers overlapping each other in the front-rear direction. The bent portion 53A is a portion where a direction in which the harness 50 extends changes in the folded portion 53 and where a deformation may be generated, in such a manner as in an endless track (caterpillar) belt, according to the movement of the holder 60 in the left-right direction. As mentioned above, the inner space of the holder 60 is formed to be larger in the front-rear direction on the first wall portion 61A side than on the second wall portion 61B side. The folded portion 53 is disposed inside the holder 60 so that the bent portion 53A is positioned at the first wall portion 61A side inside the holder 60. Therefore, a load applied to the folded portion 53 when the circular arc shape of the bent portion 53A is maintained is small.

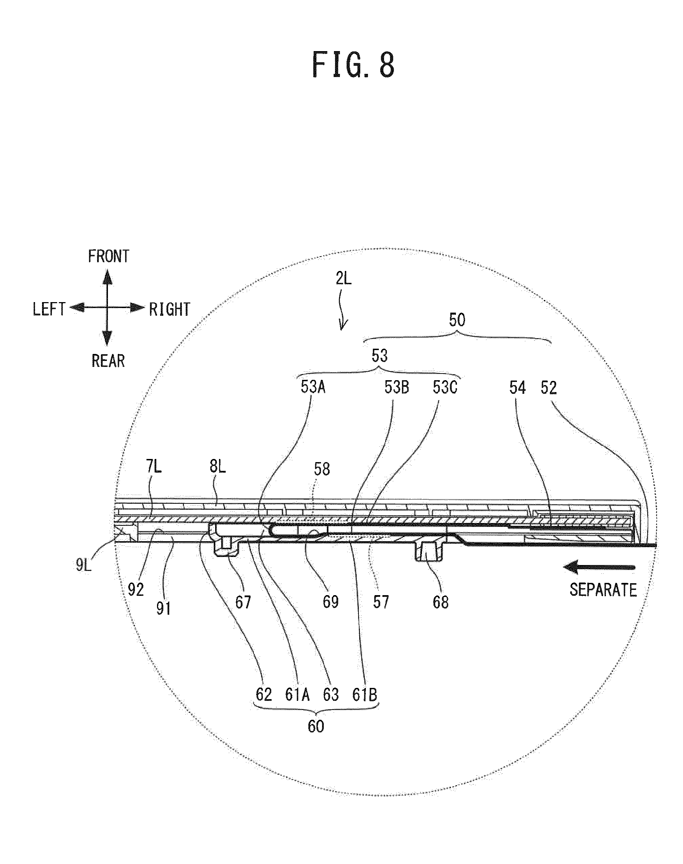

As shown in FIGS. 7 and 8, in the present embodiment, the first layer portion 53B is bonded, for example, with a two-sided adhesive tape 57, onto the second wall portion 61B of the holder 60. The second layer portion 53C is bonded, for example, with a two-sided adhesive tape 58, onto the rear surface of the digitizer substrate 7L. The two-sided adhesive tapes 57 and 58 are fixed to respective ends of the bent portion 53A where the deformation occurs along with the rotation in the same manner as in the endless track belt. The two-sided adhesive tapes 57 and 58 may be bonded to positions close to the respective ends of the bent portion 53A. In other words, a gap may be provided between each of the two-sided adhesive tapes 57 and 58 and the bent portion 53A.

As shown in FIGS. 5 to 7, the folded portion 53 of the harness 50 passes through the opening 91 of the rear cover 9L from the outer side of the detection device 2L and enters the inner side. The second layer portion 53C comes out from the holder 60 to the right and extends to the right. The left-side connection portion 54 is a portion that bends downward from the end of the second layer portion 53C, extends further downward, bends to the left, and extends further to the left. The left-side connection portion 54 includes the terminal portion 54A provided at one end that is opposite to the end that connects to the folded portion 53.

When the detection device 2L moves between the proximate state and the separated state relative to the detection device 2R, the harness 50 and the holder 60 with the above-described configurations operate in the following manner. If the outer cover 4 is in the opened state when the detection device 2L shifts to the proximate state (see the dashed tow-dotted line in FIG. 3) relative to the detection device 2R, the detection device 2L moves to the right. As shown in FIG. 7, the holder 60 fixed to the outer cover 4 moves to the left inside the opening 91 relative to the main body of the detection device 2L. In the harness 50, the left-side connection portion 54 including the terminal portion 54A (see FIG. 5) is positioned with respect to the main body of the detection device 2L. Further, in the harness 50, the right-side connection portion 51 including the terminal portion 51A, and the intermediate portion 52 connected to the right-side connection portion 51 are positioned with respect to the detection device 2R. Since the detection device 2L approaches the detection device 2R, the right-side connection portion 51 and the intermediate portion 52 move relatively to the left, and the left-side connection portion 54 moves relatively to the right. Of the folded portion 53 that is in the form of two layers overlapping each other inside the holder 60, the first layer portion 53B that is connected to the intermediate portion 52 and positioned on the rear side is pushed relatively to the left. The second layer portion 53C that is connected to the left-side connection portion 54 and positioned on the front side is pulled relatively to the right. According to the displacement of the first layer portion 53B and the second layer portion 53C occurring in the left-right direction, the folded portion 53 rotates clockwise, as viewed from below, while maintaining the circular-arc shape in the bent portion 53A, in the same manner as the endless track belt. As a result, no load such as bending load is applied to the harness 50. The bent portion 53A maintains the state of being positioned on the first wall portion 61A side where the size of the inner space in the front-rear direction is larger inside the holder 60. As a result of preventing the bent portion 53A from being positioned on the second wall portion 61B side, it is possible to increase the radius of the inscribed circle of the circular arc formed by the bent portion 53A. Therefore, a load such as bending load applied to the bent portion 53A can be reduced.

If the outer cover 4 is in the opened state when the detection device 2L shifts to the separated state with respect to the detection device 2R (see the dashed dotted line in FIG. 3), the detection device 2L moves to the left. As shown in FIG. 8, the holder 60 fixed to the outer cover 4 moves to the right inside the opening 91 relative to the main body of the detection device 2L. Since the detection device 2L separates from the detection device 2R, the right-side connection portion 51 and the intermediate portion 52 move relatively to the right, and the left-side connection portion 54 moves relatively to the left. Of the folded portion 53 that is in the form of two layers overlapping each other inside the holder 60, the first layer portion 53B is pulled relatively to the right. The second layer portion 53C is pushed relatively to the left. According to the displacement of the first layer portion 53B and the second layer portion 53C occurring in the left-right direction, the folded portion 53 rotates counterclockwise, as viewed from below, while maintaining the circular arc shape in the bent portion 53A, in the same manner as the endless track belt. As a result, no load such as bending load is applied to the harness 50. The bent portion 53A maintains the state of being positioned on the first wall portion 61A side where the size of the inner space in the front-rear direction is larger inside the holder 60.

Thus, as a result of the harness 50 having the folded portion 53, the detection device 2L can be brought closer to or separated from the detection device 2R, while maintaining the folded-back state of the harness 50, in the manner of an endless track belt. Therefore, in the information input device 1, the harness 50 is neither stretched nor contracted and a load applied to the harness 50 can be reduced.

By covering the folded portion 53 of the harness 50 with the holder 60, it is possible to control the displacement of the harness 50 that may occur when a pushing or pulling external force is applied to the folded portion 53 of the harness 50 when the detection device 2L moves closer to or separates further from the detection device 2R. Therefore, the harness 50 can be reliably maintained in a folded state. Since the holder 60 is supported by the protruding portions 92 and 93 so that the holder 60 can move in the left-right direction, the holder 60 can move according to the pushing or pulling force acting upon the folded portion 53 of the harness 50. Therefore, the folded portion 53 of the harness 50 can be prevented from being contracted inside the holder 60 by the pushing force, and from being pulled out of the holder 60 by the pulling force.

In the folded portion 53, the two ends of the bent portion 53A where a deformation may occur as the folded portion 53 rotates in the manner of the endless track belt are respectively fixed by the two-sided adhesive tapes 57 and 58 to the holder 60 and the digitizer substrate 7L, that is, to the main body of the detection device 2L. When the detection device 2L moves closer to or separates further from the detection device 2R, even if a pushing or pulling external force is applied to the harness 50, the two-sided adhesive tapes 57 and 58 hold the two ends of the bent portion 53A. Therefore, the deformation in the bent portion 53A that occurs according to the rotation in the manner of the endless track belt is less likely to fluctuate. For this reason, the rotation in the folded portion 53 of the harness 50 can be performed stably and smoothly.

As a result of providing the harness 50 and the holder 60 of such configurations, in the information input device 1, the detection device 2L can be moved in the direction in which the detection device 2L approaches the detection device 2R or in the direction in which the detection device 2L separates from the detection device 2R. When the user mounts the notebook 5 on the information input device 1, the user may insert the left cover sheet 5L of the notebook 5 from the right side of the holding sheet 41L and disposes the left cover in the positioning portion 21L of the detection device 2L. The left cover sheet 5L of the notebook 5 is fixed to the positioning portion 21L by the adhesive portion 22L. The user may then dispose the right cover sheet 5R of the notebook 5 at the positioning portion 21R of the detection device 2R. In this case, the user can move the detection device 2L together with the notebook 5 in the left-right direction. The user can also rotate the detection device 2L with respect to the detection device 2R about the protrusion 67 of the holder 60 as the axis. As a result of the left cover sheet 5L being initially fixed to the detection device 2L, the movement range of the notebook 5 is restricted. However, in the information input device 1, as mentioned above, the degree of freedom in positioning the detection device 2L relative to the detection device 2R is ensured. Therefore, the user can easily dispose the right cover sheet 5R of the notebook 5 at the positioning portion 21R. The mounting of the notebook 5 is completed when the right cover sheet 5R of the notebook 5 is fixed to the positioning portion 21R by the adhesive portion 22R.

As explained above, the information input device 1 is configured such that the detection device 2L can be moved in the direction in which the detection device 2L approaches the detection device 2R or in the direction in which the detection device 2L separates from the detection device 2R. Therefore, when the notebook 5 is opened or closed after the left cover sheet 5L and the right cover sheet 5R of the notebook 5 are respectively disposed on the detection devices 2L and 2R of the information input device 1, the detection device 2L may move relative to the detection device 2R, thereby changing the mutual positional relationship between the detection devices 2L and 2R. As a result, no load is applied to the left cover sheet 5L or the right cover sheet 5R of the notebook 5. The information input device 1 can thus prevent the notebook 5 from being bent or curved.

The above-described embodiment can be variously modified. The detection devices 2L and 2R detect the position of the electronic pen 6 by the well-known electromagnetic induction method. However, the detection devices 2L and 2R may detect the approach of the detection object to or contact with the detection devices 2L and 2R using a resistance film system (the so-called pressure-sensitive system), electrostatic capacity system, or other systems. The size, format, and material of the notebook 5 are not limited to those in the above-described embodiment. A method for attaching the notebook 5 to the detection devices 2L and 2R is not limited to the method described as an example in the above-described embodiment.

The embodiment describes an example in which the opening 91 is provided in the rear cover 9L, and the holder 60 is supported in such a manner that the holder 60 is sandwiched between the rear cover 9L and the digitizer substrate 7L in the front-rear direction. However, a support portion for the holder 60 may also be provided on the rear surface of the rear cover 9L. In this case, the rear surface of the rear cover 9L and the support portion may support the holder 60 in the front-rear direction.

The intermediate portion 52 of the harness 50 may be disposed, for example, at the center position in the up-down direction, rather than at the position closer to the center than to the ends in the up-down direction of the detection devices 2L and 2R. The holder 60 and the outer cover 4 may be engaged by a method other than that using the protrusions 67 and 68 and the eyelets 43A and 43B. For example, other methods such as screwing, riveting, stapling, hooking, and sewing may be used. The eyelet 43A engaged with the protrusion 67 may be an elongated hole. In this case, the range in which the holder 60 can rotate about the protrusion 68 as the axis can be increased and, therefore, the arrangement of the notebook 5 can be further facilitated. The holder 60 and the outer cover 4 may be configured such that the gap between the protrusion 68 and the eyelet 43B when the protrusion 68 and the eyelet 43B are engaged is larger than the gap between the protrusion 67 and the eyelet 43A when the protrusion 67 and the eyelet 43A are engaged. The holder 60 and the outer cover 4 may also be configured such that the outer cover 4 and the holder 60 are fixed by the engagement of the protrusion 67 and the eyelet 43A, and the holder 60 can be rotated about the protrusion 67 as an axis.

The protrusions 67 and 68 of the holder 60 and the eyelets 43A and 43B of the outer cover 4 are engaged by the protrusion-hole relationship. However, the combination of protrusions and holes is not limited to this example, provided that the two can be engaged with each other. For example, the holder 60 may have holes, and the outer cover 4 may have protrusions. Further, the holder 60 may have one protrusion and one hole, and the outer cover 4 may have a hole and a protrusion that are configured to engage with the protrusion and hole of the holder 60, respectively. In any case, a configuration may be used such that one protrusion and one hole function as a rotation axis side, and the detection device 2L having the holder 60 can rotate with respect to the outer cover 4 within a range of the gap between the other protrusion and other hole.

The folded portion 53 of the harness 50 may be fixed to the holder 60 and the digitizer substrate 7L, respectively, for example, with an adhesive or a clip, rather than with the two-sided adhesive tape 57 and 58. Alternatively, a structure for fixing the harness 50 may be provided to the holder 60 and the digitizer substrate 7L. For example, a structure may be provided in which the harness 50 is sandwiched between a wall surface and a rod-shaped body provided at a position that is set slightly apart from the wall surface.

In the above-described embodiment, the electronic pen 6 is an example of the "writing tool" of the present invention. The detection device 2R and the detection device 2L are examples of the "first detection device" and "second detection device", respectively. The outer cover 4 is an example of the "linking member". The right cover portion 4R and the left cover portion 4L are examples of the "fixing portion" and "holding portion", respectively. The opposing side 25R and the opposing side 25L are examples of the "first side" and "second side", respectively. The control substrate 71R and the control substrate 71L are examples of the "first circuit portion" and "second circuit portion', respectively. The harness 50 is an example of the "connection wire". The rear surface 26R and the rear surface 26L are examples of the "first rear surface" and "second rear surface" respectively. The right-side connection portion 51 and the left-side connection portion 54 are examples of the "first connection portion" and "second connection portion", respectively. The holder 60 is an example of the "first cover member". The protruding portions 92 and 93 are examples of the "support portion". The protrusions 67 and 68 are examples of the "first engagement portions". The eyelets 43A and 43B are examples of the "second engagement portions". Flanges 65 and 66 are examples of the "third engagement portion". The band-shaped body 44 corresponds to the "second cover member".

## Claims

1. An information input device (1) configured to acquire information inputted on a recording medium (5) by a writing tool (6), the recording medium being in a booklet form in which a pair of cover sheets (5L, 5R) and a plurality of sheets stacked and disposed between the pair of cover sheets are bound at a part of an edge thereof, the information input device comprising:
a first detection device (2R) configured to detect a position of the writing tool in close proximity to the first detection device, the first detection device being a plate-shaped body configured to face a substantially entire surface of a first cover sheet (5R) of the pair of cover sheets, the first detection device having a first detection surface;
a second detection device (2L) configured to detect a position of the writing tool in close proximity to the second detection device, the second detection device being a plate-shaped body configured to face a substantially entire surface of a second cover sheet (5L) of the pair of cover sheets, the second detection device having a second detection surface; and
a linking member (4) comprising:
a fixing portion (4R) fixing the first detection device in a state in which the first detection device and the second detection device are disposed such that a first side (25R) and a second side (25L) are parallel to each other and positioned closer to each other than to other sides, the first side being one of sides surrounding an outer edge of the first detection surface, and the second side being one of sides surrounding an outer edge of the second detection surface;
a holding portion (4L) holding the second detection device such that the second detection device is movable in a direction in which the second side approaches the first side and in a direction in which the second side separates from the first side; and
a bending portion (4C) connecting the fixing portion and the holding portion, the bending portion being configured to bend to a position in which the first detection device and the second detection device face each other.

2. The information input device according to claim 1, further comprising:
a first circuit portion (71R) provided in the first detection device;
a second circuit portion (71L) provided in the second detection device; and
a connection wire (50) including a plurality of conductive paths formed on a flexible insulating film and electrically connecting the first circuit portion and the second circuit portion, the connection wire comprising:
a first connection portion (51) disposed between a first rear surface of the first detection device and the fixing portion, the first connection portion including a terminal portion (51A) electrically connected to the first circuit portion, and the first rear surface being a surface on a side opposite to the first detection surface;
an intermediate portion (52) connected to the first connection portion and extending between the first detection device and the second detection device;
a folded portion (53) connected to the intermediate portion and disposed between a second rear surface of the second detection device and the holding portion, the folded portion being folded back about an axis extending in a first direction to form two overlapping layers between the second detection device and the holding portion, the second rear surface being a surface on a side opposite to the second detection surface, and the first direction being orthogonal to a direction in which the intermediate portion extends and orthogonal to a direction in which the second detection device and the holding portion face each other; and
a second connection portion (54) connected to the folded portion, the second connection portion including a terminal portion (54A) electrically connected to the second circuit portion.

3. The information input device according to claim 2, further comprising:
a first cover member (60) fixed to the holding portion of the linking member and covering the folded portion, the folded portion being disposed between the second rear surface and the first cover member; and
a support portion (92, 93) provided to the second detection device and supporting the first cover member such that the first cover member is movable in a second direction along the second rear surface, the second direction being orthogonal to a direction in which the second side extends.

4. The information input device according to claim 3, wherein
the first cover member comprises two first engagement portions (67, 68) disposed side by side in the second direction and fixing the first cover member to the holding portion,
the holding portion comprises two second engagement portions (43A, 43B) respectively engaging with the two first engagement portions,
one of the two first engagement portions and one of the two second engagement portions are a protrusion and a hole, or a hole and a protrusion, respectively, and are configured to fix the linking member to the first cover member by engaging with each other,
the other of the two first engagement portions and the other of the two second engagement portions are a protrusion and a hole, or a hole and a protrusion, respectively, and
a gap between the other of the two first engagement portions and the other of the two second engagement portions is larger than a gap between the one of the two first engagement portions and the one of the two second engagement portions.

5. The information input device according to claim 4, wherein the first cover member comprises:
a wall portion (61) to which the two first engagement portions are provided;
three side walls (62, 63, 64) protruding from edges of the wall portion towards the second rear surface, the three side walls being disposed to open one of the edges of the wall portion and close three of the edges of the wall portion, the one of the edges being positioned on a side of the second side; and
a third engagement portion (65, 66) connected to two opposing side walls (63, 64), among the three side walls, and engaging with the support portion, and wherein
the folded portion is disposed between the second rear surface and the wall portion, and
the support portion supports the first cover member via the third engagement portion such that the first cover member is movable in the second direction.

6. The information input device according to claim 5, wherein
the folded portion comprises:
a first layer portion (53B) that is a portion disposed on a side of the wall portion, of the two overlapping layers;
a second layer portion (53C) that is a portion disposed on a side of the second rear surface, of the two overlapping layers; and
a bent portion (53A) connecting the first layer portion and the second layer portion, the bent portion being a portion where a direction in which the connection wire extends changes and where a deformation occurs according to a movement of the first cover member in the second direction, and wherein
the information input device further comprises:
a first fixing member (57) fixing the first layer portion to a wall surface of the wall portion on a side of the second rear surface, the first fixing member being provided at one end of the bent portion; and
a second fixing member (58) fixing the second layer portion to the second rear surface, the second fixing member being provided at the other end of the bent portion.

7. The information input device according to claim 5 or 6, wherein a first distance (D5) is less than a second distance (D4), the first distance being a distance in a third direction between the second rear surface and the wall portion on a side of the one edge that is open, the second distance being a distance in the third direction between the second rear surface and the wall portion on a side opposite to the one edge that is open, the third direction being a direction in which the wall portion and the second rear wall face each other.

8. The information input device according to any one of claims 2 to 7, wherein the intermediate portion is disposed at a position closer to a center than ends of the first side and the second side in a direction in which the first side and the second side extend.

9. The information input device according to any one of claims 2 to 8, wherein the linking member further comprises a second cover member (44) that sandwiches the intermediate portion between the second cover member and the bending portion so as to cover the intermediate portion.

10. The information input device according to claim 9, wherein the second cover member is disposed at a position in which an end portion of the second cover member on a side of the holding portion overlaps an end portion of the second detection device on a side of the second side.
